(19) 

Europäisches
Patentamt
European
Patent Office
Office européen
des brevets

(11) **EP 4 141 813 A1**

(12) **EUROPEAN PATENT APPLICATION**

(43) Date of publication:
**01.03.2023 Bulletin 2023/09**

(21) Application number: **22187911.7**

(22) Date of filing: **29.07.2022**

(51) International Patent Classification (IPC):
**G06V 20/52** (2022.01)     **G06Q 50/26** (2012.01)
**G06Q 50/30** (2012.01)     **G06V 20/59** (2022.01)
**G06V 40/20** (2022.01)     **B60W 50/00** (2006.01)
**G06Q 50/00** (2006.01)     **G10L 25/48** (2013.01)

(52) Cooperative Patent Classification (CPC):
**G06Q 50/265; G06Q 50/30; G06V 20/59;
G06V 40/20;** G06F 40/30; G06Q 50/01; G10L 25/48

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021 US 202117462472**

(71) Applicant: **Intel Corporation
Santa Clara, CA 95054 (US)**

(72) Inventors:
• **BUERKLE, Cornelius
76137 Karlsruhe (DE)**
• **OBORIL, Fabian
75139 Karlsruhe (DE)**

• **PASCH, Frederik
76137 Karlsruhe (DE)**
• **LIEW, Ying Wei
07 11900 Sg Ara (MY)**
• **TAN, Say Chuan
07 11950 Penang (MY)**
• **YEW, Chien Chern
10350 Penang (MY)**
• **GRAEFE, Ralf
85540 Haar (DE)**
• **GEISSLER, Florian
81371 München (DE)**
• **ALVAREZ, Ignacio J.
Portland, 97229 (US)**

(74) Representative: **2SPL Patentanwälte PartG mbB
Landaubogen 3
81373 München (DE)**

(54) **DETECTION AND MITIGATION OF INAPPROPRIATE BEHAVIORS OF AUTONOMOUS VEHICLE PASSENGERS**

(57) Disclosed herein are systems and methods for detecting and mitigating inappropriate behavior. The systems and methods may include receiving data. Using the data a harassment score and/or classification for a behavior may be determined. Using the harassment score and/or classification, a determination may be made as to when the harassment score and/or classification for the behavior exceeds a threshold. When the threshold is exceeded, a protection system and/or action engine may be activated to mitigate the inappropriate behavior.

FIG. 1

EP 4 141 813 A1

**Description**

FIELD OF THE DISCLOSURE

The present subject matter relates to detection and mitigation of inappropriate behavior in a vehicle. Specifically, the present disclosure relates to detection and mitigation of harassing and/or violent behavior as well as vandalism within a vehicle or similar modes of transportation.

BACKGROUND

Autonomous vehicle usage is a fast growing area of technology. Currently, autonomous vehicles exist in various stages of automation. The automation ranges from a person being required to perform every action to drive the car, to fully autonomous where the vehicle is able to navigate from point A to point B without any human intervention. As automation increases, increasing need to monitor passengers for inappropriate behavior increases due to the lack of a human driver to monitor and mitigate inappropriate behavior of the passengers.

BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

   FIG. 1 shows a system in accordance with at least one example of this disclosure.
   FIG. 2 shows a method in accordance with at least one example of this disclosure.
   FIG. 3 shows a schematic of a protection system in accordance with at least one example of this disclosure.
   FIG. 4 shows a system in accordance with at least one example of this disclosure.
   FIG. 5 shows an event detection and classifier in accordance with at least one example of this disclosure.
   FIG. 6 shows a method in accordance with at least one example of this disclosure.
   FIG. 7 shows a method in accordance with at least one example of this disclosure.
   FIG. 8 shows a classification scheme in accordance with at least one example of this disclosure.
   FIG. 9 shows an association table in accordance with at least one example of this disclosure.
   FIG. 10 shows an action engine in accordance with at least one example of this disclosure.
   FIG. 11 shows a method in accordance with at least one example of this disclosure.
   FIG. 12 shows a method in accordance with at least one example of this disclosure.
   FIG. 13 shows a block diagram illustrating an example machine upon which any one or more of the techniques (e.g., methodologies) discussed herein may perform in accordance with at least one example of this disclosure.

DETAILED DESCRIPTION

Shared ride services may allow several passengers to use the same automated vehicle but may also introduce the opportunity for one or more passengers to feel harassed. For example, if a harasser or group of harassers enter a car in which an individual is already riding, the individual in the car may experience harassment or feel harassed. In vehicles with a dedicated driver, the driver may act as a supervisor for the passengers by monitoring behavior. In contrast, in a driverless autonomous vehicle, the passengers may be unprotected against various kinds of actual or perceived harassment.

To overcome this challenge, disclosed herein are systems and methods to monitor and curtail harassment in autonomous vehicles. The systems and method disclosed herein may include several components, such as but not limited to audio sensors, cameras, vibration sensors, and software components for detecting and classifying behaviors as well as performing actions to mitigate harassment.

As disclosed herein harassment, harassing behavior, abnormal behavior, inappropriate behavior, dangerous behavior, violent behavior, and/or otherwise undesirable behavior may be used interchangeably to indicate types of behavior that makes at least one passenger of a vehicle uncomfortable, in danger, and/or otherwise fearful for his or her safety.

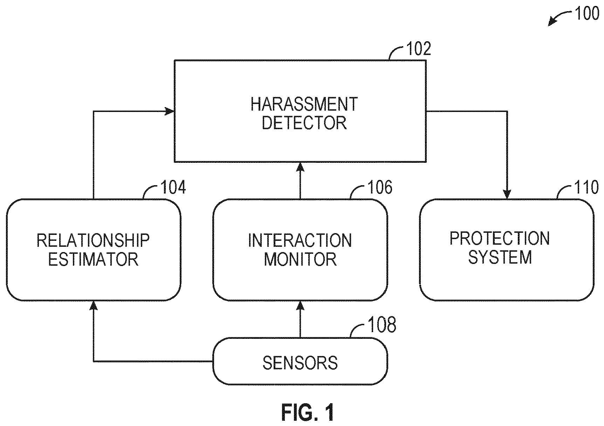

Turning now to the figures, FIG. 1 shows a system 100 for detecting and mitigating harassment in accordance with at least one example of this disclosure. As shown in FIG. 1, system 100 may include a harassment detector 102, a relationship estimator 104, an interaction monitor 106, sensors 108, and a protection system 110. Each of the components of system 100 may be part of a single system, such as on-board an autonomous vehicle, or parts of multiple systems. For example, the relationship estimator 104 may be part of a remote system that provides data and/or a relationship estimation to an on-board computer of an autonomous vehicle.

As disclosed herein, during a trip in an autonomous vehicle, sensor 108 can monitor interactions between passengers. Signals from sensors 108 (e.g., represented by sensor data) may be transmitted to, and received by, a processor of system 100. The processor, which may be executing harassment detector 102, relationship estimator104, and interaction monitor 106, may use the signals to determine if behavior within the autonomous vehicle qualifies as harassing behavior. If the behavior qualifies as harassing behavior, then harassment detector 102 can activate protection system 110.

Examples of harassing behavior can include touching another person, aggressive or otherwise threatening facial expressions, abusive and/or harassing language, fighting, etc. For instance, two people that know each other may be in a vehicle with a stranger. The two people may be discussing inappropriate topics such as sexually explicit topics, highly controversial political topics, etc., which the stranger finds offensive and/or harassing. For example, two people may be males speaking inappropriately about women and the stranger, who may be a male or female, may view the conversation as harassment.

As disclosed herein, environmental data collected by sensors 108, can include sound, images, etc. System 100 may also use relationship data for the passengers that is received from an external source, such as a remote computer. The remote computer may be an app on a rider's phone, watch, or other smart device, as well as remote servers operated by an entity that controls the vehicle or other third parties. The relationship may be that the passengers of a vehicle all know each other (e.g., are friends or work colleagues), are in a relationship (e.g., are married, engaged, or dating), have cultural similarities, etc. Examples of cultural similarities can include being from the same country or region of a country, religious similarities, etc.

As disclosed herein, system 100 can be implemented to monitor the interaction of passengers in a driverless car in order to make sure that passengers do not feel or are actually threatened by another co-traveler. Thus, system 100 may make traveling for all passengers safer. As disclosed herein system 100 may directly interact with the passengers.

Relationship estimator 104 may be used to classify the relationship between the passengers. Therefore, relationship estimator 104 may utilize sensors 108 in the vehicle. Sensors 104 may include cameras, LiDARs, microphones, etc. In addition, relationship estimator 104 may use the profile of passengers (e.g., a profile in a booking app, in social networks such as Facebook, etc.) to determine relationships. System 100 may also consider if passengers entered the vehicle at the same time. For example, if they entered the vehicle together, how they greet each other, and/or how they interact may be used to determine a relationship between the passengers. For instance, people that enter the vehicle together may have a higher probability of knowing each other than people that entered the vehicle at different times. Bluetooth and Wi-Fi identification may be used to distinguish if a person regularly meets someone.

Relationship estimator 104 may also take cultural information into account. For example, greeting habits may differ in various countries. Thus, two people shaking hands may be viewed as a customary norm in one country, but seen as offensive in another.

Using the various data, relationship estimator 104 may determine a relationship score to estimate a relationship between passengers. For example, the relationship score may be a value between 0 and 1, where 1 represents a family-like relationship and 0 represents complete strangers from different cultural backgrounds.

Interaction monitor 106 may use the same sensors used to supply signals to relationship monitor 104 or additional sensors. As disclosed herein, system 100 may monitor the passengers' interactions. Interaction monitor 106 may look for gestures and/or body contact by tracking the movements of the body poses, such as by tracking movement of limbs, head, inanimate objects within the vehicle, etc. Various aspects of body poses may include the movement itself, the speed towards other passengers, and feedback from the other passenger. For example, if a passenger moves his hand towards another person, the speed might give an indicator for the aggressiveness. As such, interaction monitor 106, and system 100 as a whole, may be able to detect physical violence.

Interaction monitor 106 may also monitor the conversation. For example, and as disclosed herein, using speech recognition, interaction monitor 106 may determine if words are spoken that are racially offensive or sexist or in any sense part of a potential harassment. Beside spoken words interaction monitor 106 may also monitors for and detect other sounds such as, but not limited to, screams or crying. By monitoring sounds and speech, system 100 may differentiate spoken words and/or actions based on context. Thus, system 100 not only detects harassment but also may check the relation status of the passengers to avoid false positives as disclosed herein.

Interaction monitor 106 may or may not record the interactions. During use, the audio monitoring and/or recording might only be activated if aggression is detected by any of the sensors. For example, microphones may monitor, without recording, speech. If an aggressive or offensive word is detected, system 100 may begin recording audio for a predetermined duration to preserve evidence for later use and analysis.

System 100, via sensors 108, and interaction monitor 106, may monitor an emotional state of the passengers. For example, by monitoring and recognizing the facial expressions or the change of the body temperature of passengers, system 100 may determine the presence of fear or other heightened sense of awareness or discomfort by passengers.

As disclosed herein, system 100 may be based on AI/classifier modules that output scores for different interactions. These classes can cover, but are not limited to, no interaction, speaking only, shouting, holding hands, kissing, etc. Certain interactions may also be part of a sub-class to take into account if an interaction is likely voluntarily or based on force. Each class may then be assigned a score (e.g., between 0 and 1) as output of the module as disclosed herein.

Beside interactions, system 100 may also monitor the interior of the vehicle for weapons and determine if they are likely to be used or are being used. Monitoring for weapons can include analyzing images for items that resemble weapons or listening for words that describe weapons. For example, sensors 108 may include a metal detector, such as installed in a doorframe of the vehicle, that is able to detect a large concentration of metal that may be a gun or knife. With this detection, system 100 may access a database of images for ready comparison to determine if a gun or knife is removed from a bag or other concealed location.

As disclosed herein, when system 100 detects a harassing situation, system 100 may activate protection system 110. For example, system 100 may use information from interaction monitor 106 and the relationship estimator 104 to determine whether the interaction between the passengers might be a potential harassment situation. If system 100 identifies such a situation it might activate additional sensors 108 or detection systems for the protection of passengers. For example, an enhanced audio classifier, which may be part of interaction monitor 106 to collect additional data to obtain a better insight into the interaction.

Using the systems and methods disclosed herein, relationship and cultural aspects, which may have an important influence for the judgment of system 100, may be used to determine if an interaction is harassment. For example, some interactions might be tolerated between friends that are unacceptable between strangers.

The output of harassment detector 102 may be a single value for harassment, such as yes or no. The output of the harassment detector 102 may also be a score between 0 and 1, or 0 and 100. The output may also contain additional information on what kind of harassment was detected (e.g., violence, sexual threat, religious harassment etc.).

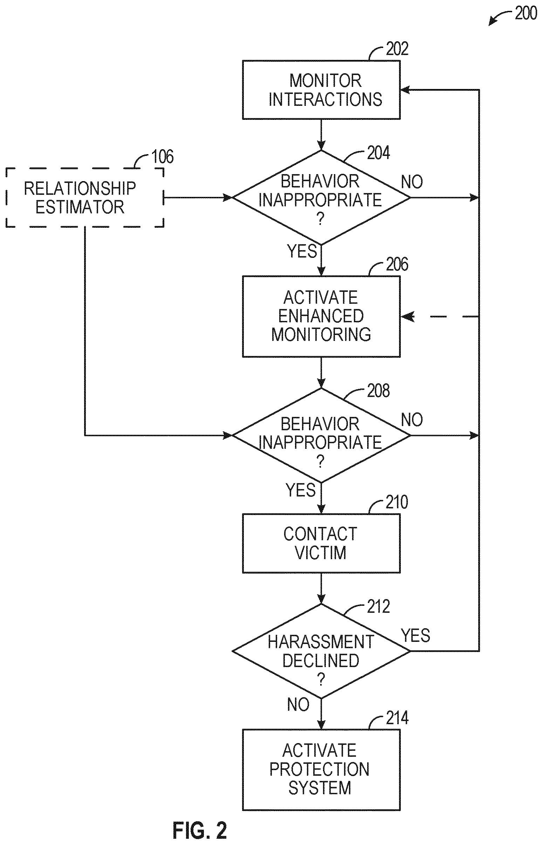

FIG. 2 shows a method 200 for monitoring interactions and training at least one model in accordance with at least one example of this disclosure. Method 200 may begin at stage 202 where interactions may be monitored. For example, when the autonomous vehicle arrives at a location to pick up passengers, one or more sensors, such as sensors 108, can be activated. The sensors can then begin collecting environmental data. Non-limiting examples of environmental data include sounds (words and decibel levels), images, temperatures, humidity, etc.

Part of monitoring interactions can include calculating a harassment score. The harassment score can be a probability that an event or series of events constitutes harassment. For example, Equation 1 shows an example equation for calculating if an event or series of events constitutes harassment.

$$p_{harassment} = \frac{1}{\sum_{i=i...n} \omega_i} \sum_{i=1...n} \omega_i p_i \qquad \text{Equation 1}$$

where $p_i$ is the probability of a feature, i, being harassment, and $\omega_i$ is a weight given to the probability to allow for a given feature to have a different impact for different scenarios.

For example, a hug may have a probability X and a handshake may have probability Y regardless of the scenario or other circumstances for each event. Based on relationship data, the weight given to a hug may differ. For instance, when relationship estimator 104 provides an indication that the passengers know one another, a hug may be given a low weight (e.g., 0.1) and when the passengers do not know one another, a hug may be given a higher weight (e.g., 0.75). In the United States of America where handshaking is a common greeting, the weight for a handshake may be low (e.g., 0.1) and in a country such as Japan where a handshake may be less common, the weight for a handshake may be higher (e.g., 0.5).

As shown in Equation 1, the weighted average of all events occurring within a vehicle can be continuously calculated as part of monitoring interactions.

When the weighted average exceeds a predetermined threshold, a determination can be made as to if inappropriate behavior has occurred (decision block 204). For example, when the weighted average of various events detected by the system exceeds 0.5, or 50%, there may be a higher likelihood that harassing, offensive, or otherwise inappropriate behavior has occurred. If the behavior is not harassing, offensive, or otherwise inappropriate, method 200 may continue monitoring behavior (202).

If harassing, offensive, or otherwise inappropriate behavior is detected, then enhanced monitoring may be activated (206). Enhanced monitoring may include activating additional sensors and/or adjusting the sensitivity of currently used sensors to monitor the situation more closely. For example, if facial features of a passenger indicate distress, the sensitivity of microphones monitoring sound levels may be increased to capture quieter sounds. For instance, the potential victim may show facial expressions that indicate harassment, but the harasser may be speaking in a low voice. Thus, the sensitivity of the microphones monitoring the sound levels may be adjusted to pick up softer sounds like the harasser whispering and/or the victim breathing heavy. An additional sensor may include a panic button within the vehicle or on an app of the victim's phone, watch, or other smart device.

Using the additional data obtained during the enhanced monitoring, a determination can be made as to whether the behavior is inappropriate (decision block 208). The determination of whether the behavior is inappropriate may include calculated a harassment score as disclosed above with respect to stage 204. The probabilities and weights used in Equation 1 may remain the same during enhanced monitoring or may differ. For example, the weight associated with a hug may increase during enhanced monitoring while the probability associated with a hug remains the same.

The harassment score needed to trigger inappropriate behavior may be different during enhanced monitoring. For example, to trigger enhanced monitoring, the necessary harassment score may be low so as to preemptively activate additional sensors, etc. Once enhance monitoring has commenced, the needed harassment score to constitute harassment may be a value higher, such as 0.75 or 75%, to indicate that behavior is actually harassing, offensive, or otherwise inappropriate. If the behavior is not harassing, offensive, or otherwise inappropriate, method 200 may continue enhance monitoring (206) for a predetermined time to ensure the behavior is not inappropriate or monitoring behavior (202) without enhancements.

If harassment is detected, then the victim can be contacted (210). Contacting the victim may include activating two-way communication within the vehicle. For example, an operator of the vehicle may have security personnel that monitor the system for alerts and when inappropriate behavior is detected, activate an intercom within the vehicle to ask the victim if he or she is already and/or needs assistance. The security personnel may also advise the harasser that his or her behavior is inappropriate and that if the behavior does not stop additional remedial measure will be taken as disclosed herein. The intercom may include a display and/or audio system of the vehicle that the victim can interact with to alert security personnel.

Contacting the victim may also include transmitting a message to a phone, watch, or other smart device of the victim. The message can ask the victim to confirm if the behavior is harassing, offensive, or otherwise undesired. The victim can respond to the message confirming or denying that the behavior is harassing, offensive, or otherwise undesired.

The system may also monitor whether the potential aggressor forces the victim to give feedback, or if the victim freely interacts with the system. For example, if harassment is acknowledged using a secret code, or an objection of the victim hasn't been raised, the system may interpret the victim's lack of action as fear hindering the victim from responding. For instance, the user may have two security codes. The first security code may indicate that the passenger is not in distress or otherwise fearful, but and the behavior was not inappropriate. The second code may mean the passenger feels distress or otherwise in fear, but does not want the aggressor to know. Upon receiving the second code the security personnel can take action to mitigate the harassment, but thank the user for confirming that harassment has not occurred so as to not tip off the aggressor.

If the victim confirms that behavior is not harassing, offensive, or otherwise inappropriate, method 200 may continue monitoring behavior (202). If the victim confirms that behavior is harassing, offensive, or otherwise inappropriate, a protection system may be activated. Activating the protection system may include recording events and saving the recording to a local storage medium and/or transmitting the recordings to the cloud for storage. The recordings can be used as evidence for any later criminal and/or civil matters that may develop. In addition, the recordings can be used for training future models and/or as reference points for detecting inappropriate behaviors.

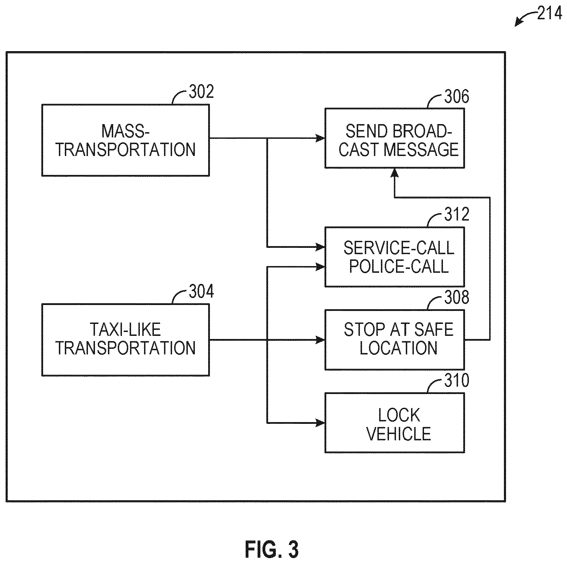

FIG. 3 shows a schematic for protection system 110 in accordance with at least one embodiment of this disclosure. Protection system 110 can initiate counter measures, which can depend on the type and severity of detected harassment and/or the mode of transportation (mass transportation 302 or taxi-like transportation 304) as disclosed herein. For example, an initial countermeasure for a mass transportation system (e.g., a bus, train, plain, etc.) may be sending a broadcast message (306) that includes visual and audio feedback to the passengers that the infraction is detected and might be reported.

For taxi-like transportation systems (e.g., shared ride services, etc.) active countermeasures may include fastening the seat belt of the aggressor to limit his or her movement within the vehicle, enabling all interior lights, stopping the car (308) if safely possible to let the victim leave the situation, and then locking the vehicle (310) to lock the aggressor in the vehicle. In order to determine where a safe stop is possible the vehicle can have a map that contains designated areas that allow for a safe exit of a passenger. These could be public places which are likely to have a large number of other pedestrians, restaurants or shops, public businesses such as gas stations, which may have registered themselves as safe harbors, etc. For such safe harbors, the vehicle may transmit a message to the shop before the vehicle arrives to inform them that the car will drop off an endangered person or an aggressor. Then the shop employees can await the arrival of the car and guarantee that the victim is safe.

The system may also initiate a call to a service team that can then try to deescalate. This service team might also obtain access to data captured from the sensors within the car to better assess the situation. For example, the system may initiate a call to a police or other authorities (312). In this situation, it may be possible to establish a video-connection and by that means enable an officer to try to deescalate the situation, get further insights, and enforce further actions.

Still other options may be initiated to alert others outside the vehicle of the dangerous situation. For example, by enabling exterior lights (e.g., the emergency flashers, headlights, etc.) or activating the horn, crowds or other persons exterior to the vehicle may be alert. The vehicle may even deviate from its intended destination and drive toward a crowded area such as a gas or police station, when as indicated above, the emergency flashers are also enabled.

In mass transportation settings the broadcast message may be to people nearby, such as other passengers. The other passengers can be made aware of the situation and may intervene as appropriate. This is often already enough to stop a potential harasser.

When a ride as completed, but behaviors that are similar to harassment as indicated by the harassment score, the passenger can be contacted, such as by the methods disclosed with respect to stage 210, to determine if the passengers felt threatened. For example, if the harassment score was calculated to be 0.49 and 0.5 was the threshold to activate enhanced monitoring, a message may be sent to the user's smart device to inquire as to whether or not the user felt threatened. This information, which may be in survey form, can be used to tune the accuracy of the system. For example, the weights for given behaviors may be increased if the user indicated he or she felt threatened. If the user indicates no feelings of anxiety or other fear, the weights may be lowered to prevent triggering a false positive in the future.

While system 100 and method 200 have been described with respect to an autonomous vehicle, system 100 and method 200 also may be utilized with vehicles that have a driver or other personnel who can assist with the situation. In vehicles with a driver, the safety of both the passenger and the driver can be improved. For example, if a driver is attacked, he or she may not be able to safely steer the vehicle. As a result, protection system 110 may take control of the vehicle and drive to a police station or hospital.

One of the planned services based on driverless cars is shared autonomous vehicles (SAVs). SAV services could merge cabs/taxis, carsharing, and ridesharing systems into a singular transportation mode. Physical safety in the unmanned SAV may be a concern from the passengers as there may be no robust way in detecting the unpleasant situations, including events of violence or attempted violence other than by using smart surveillance camera as part of the occupant monitoring system (OMS). Violence could range from an actual fight to sexual harassment to child abuse. However, since there is no driver to intercede, detection of the violence could occur too late when using traditional surveillance systems. They systems and methods disclosed herein allow for early actions to be taken before the physical violence happens with a reliable intelligent system to detect violent behaviors.

The systems and methods disclosed herein may recognize components of a cycle of violence - a calm phase, a tension phase, and a crisis phase. To prevent violence, early detection and prevention are necessary. Before the crisis phase (i.e., physical violence) there may be violence at the tension phase in the form of verbal violence, such as scolding, unpleasant words (arguing, verbal sexual harassment, etc.) or mild physical altercations such as pushing, yelling, etc. Using the systems and methods disclosed herein, violence may be detected at the tension phase in real time and accurately. Once detected, necessary actions may be taken using the systems and methods disclosed herein before the situation reaches a crisis phase where severe bodily harm may occur do to violent physical contact.

The systems and methods disclosed herein provide for SAVs having advanced driver-assistance systems (ADAS) capabilities, to recognize violent events in the vehicles and take further action. Multimodal audio, speech, and image detection and a fusion scheme to be created to improve the overall discrimination ability, considering the processing pipeline and aggregation, to accurately detect the cycle of violence (calm phase, tension phase, crisis phase), identify the severity, and feed information to action engine, sometimes referred to as a protection system, for actions, such as giving warning, rolling down the windows, stopping the vehicles, alerting authority, and rerouting the vehicle to police station or to an area with crowd.

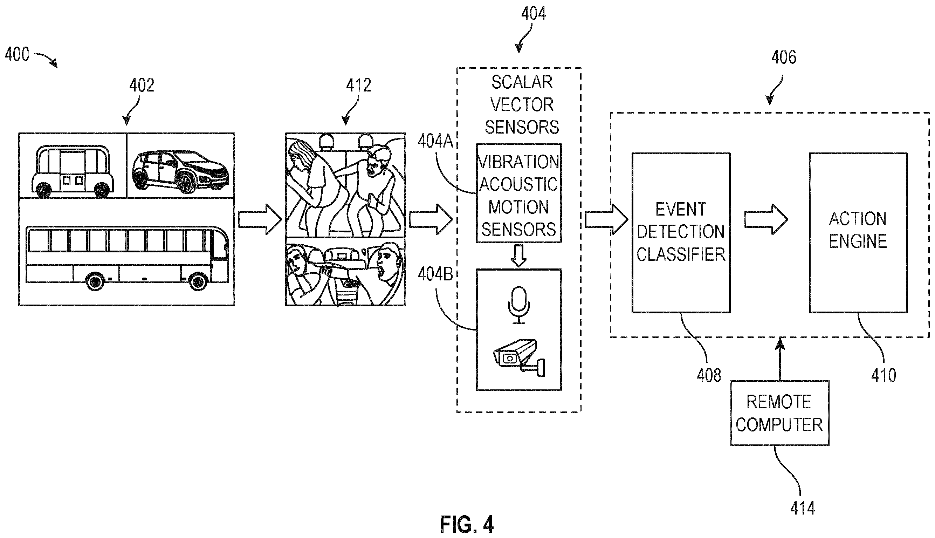

The systems and methods disclosed herein increase reliability with moving vehicles, which may have complications due to variations in lighting conditions and constant change of outdoor element or reflections, which may lead to misclassification. FIG. 4 shows a system 400 for detecting and mitigating violence within a vehicle 402 in accordance with at least one example of this disclosure. As shown in FIG. 4, system 400 may include an autonomous vehicle 402 (e.g., a car, bus, train, trolly, etc.), one or more sensors 404 (labeled individually as sensors 404A and 404B), and a computing system 406. Computing system 406 may include an event detection and classifier 408 and an action engine 410.

Examples of harassing behavior 412, sometimes referred to as abnormal behavior or violent behavior, can include touching another person, aggressive or otherwise threatening facial expressions, abusive and/or harassing language, fighting, etc. For instance, two people that know each other may be in vehicle 402 with a stranger. The two people may be discussing inappropriate topics such as sexually explicit topics, highly controversial political topics, etc., which the stranger finds offensive and/or harassing. For example, two people may be males speaking inappropriately about women and the stranger, who may be a male or female, may view the conversation as harassment.

As disclosed herein, environmental data, such as sound, images, etc. may be collected from autonomous vehicle 402 via sensors 404, which can then be passed to computing system 406. System 400 may also use relationship data for the passengers that is received from an external source, such as remote computer 414. Remote computer 414 may be an app on a rider's phone, watch, or other smart device, as well as remote servers operated by an entity that controls vehicle 402 or other third parties. The relationship may be that the passengers of a vehicle all know each other (e.g., are friends or work colleges), are in a relationship (e.g., are married, engaged, or dating), have cultural similarities, etc. Examples of cultural similarities can include being from the same country or region of a country, religious similarities, etc.

The systems and methods disclosed herein may use multisensory technology with a combination of the human intelligence in understanding the intent of conversations and actions. Using the intent, likely violent acts may be detected and prevented. The violence may be prevented by deescalating the situation at the onset of recognizing the tension phase of violence. Appropriate action may be taken to hinder the situation escalating to the crisis phase by either stopping the violence or reporting the violence to the proper authorities.

As disclosed herein, event detection classifier 408 may receive input signals from sensors 404. The input signals may correspond to violence sounds, violence speech, violent acts, etc. Using the inputs, intent and action recognition multimodality may be used to classify the likely type of violence.

Action engine 410 may perform autonomous actions to prevent and/or report violent behavior. As disclosed herein, action engine 410 may transmit messages to passengers, display messages, and/or redirect the vehicle to safe spaces such as police stations.

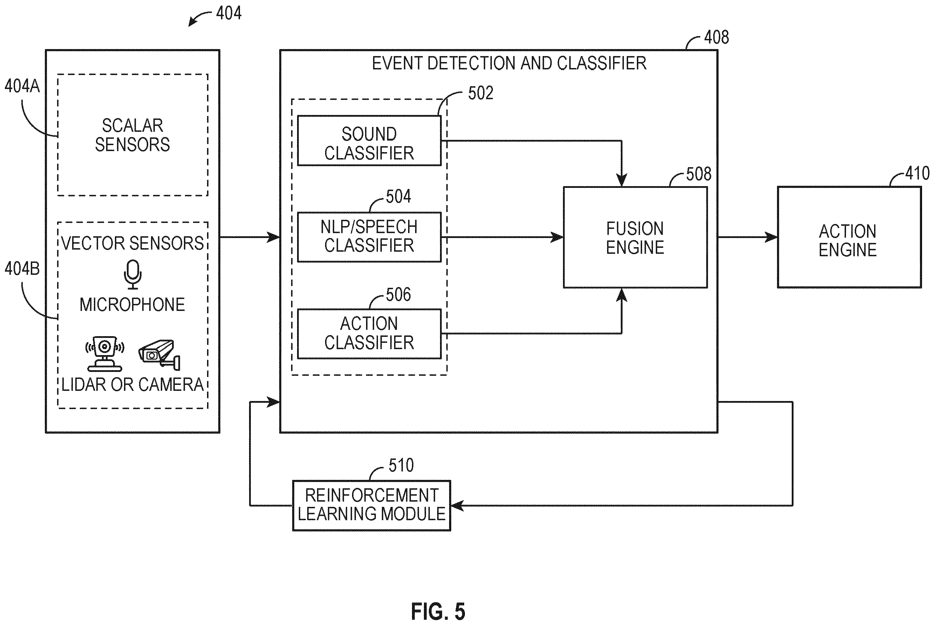

FIG. 5 shows a schematic for event detection classifier 408 in accordance with at least one example of this disclosure. Sensors 404 may include objects and devices that enable the vehicle to detect movements and audio events from within the vehicle and/or proximate the exterior of the vehicle. The movements and audio events may be abnormal events as disclosed herein. Examples of sensors 404 can include, but are not limited to, scalar sensor 404A and vector sensors 404B. Scalar sensors 404A may measure a scalar quantity and may include vibration sensors, passive infrared (PIR) sensors, motion sensors, acoustic sensors, etc. Vector sensors 404A may capture vector quantities, such as movement, which may have a speed and direction or sound, which may have an origin from a specific location within the vehicle and travel in a given direction at a given decibel level. Examples of vector sensors 404B include, cameras, microphone arrays, etc.

Event detection and classifier may include a sound classifier 502. Sound classifier 502 may for a baseline classification leveraging datasets for environmental sound classification (ESC) to identify semantic classes in human, non-speech sounds such as a crying baby, clapping, laughing, coughing, snoring, etc. By establishing a baseline, false positives for violence may be avoided. For example, by establishing a baby crying as a baseline, should a baby start to cry in a vehicle, sound classifier 502 may determine the sound is a non-speech sound that is not related to a violent action. However, by establishing the baseline, sound classifier 502 may determine that a person screaming and/or yelling, may be non-speech and related to a violent action.

A speech recognizer 504, sometimes referred to as a natural language processor (NLP), may be used to recognize violent phrases or intent. For example, speech recognizer 504 may recognize phrases such as "go away," "don't touch me," "help," etc. as an indication of a violent action or a precursor to a violent action. While speech recognizer 504 can detect words, speech recognizer 504 does not transcribe the passenger's speech to text. In an example, rather than transcribing all speech to text, speech recognizer 504 may utilize a lightweight language model and vocabulary to detect various phases known to be associated with violence at the autonomous vehicle (i.e., without connecting to cloud) for real-time reaction.

To determine intent, the audio speech may be divided into categories. For example, the speech may be divided into three categories comprising "action," "object," and "location." The various phrases that may indicate intent may be stored as a dictionary. For example, the phase "don't touch me" can be stored as a dictionary with the key:value pairs {action: "touch", object: "me", location: "none"}. Various known phrases associated with violence can be stored as a dataset that can be used for the training, such as using fluent speech commands dataset as a base. Datasets for specific intent can be added as needed. During operations new datasets can be created with key:value pairs can be generated and added to datasets using feedback from passengers as disclosed herein.

An action recognizer 506 may be used to identify actions that may intend violence. Action recognizer 506 may leverage computer vision from vector sensors 404B, such as twodimensional cameras, three-dimensional cameras, LiDAR systems, etc. A video anomaly detection algorithms using deep learning techniques disclosed herein may be used in conjunction with fusion schemes, such as predictive and generative models. Non-limiting examples of these categories include variational autoencoders (VAEs) and convolutional long short-term memory networks.

Event detection and classifier 408 may include a sensor fusion engine 508, that may combine data derived from sensors 404. For example, sensor fusion engine 508 may include integrated circuitry and/or software to produce a merged sensor data. For instance, sensor fusion engine 508 may receive sound data indicating a slap has occurred and image data that tracks the hand of a passenger striking the face of another passenger. Using the two pieces of data, sensor fusion engine 508 may classify the event as a violent act of one passenger slapping another.

As disclosed herein, feedback may be provided by passengers and the feedback may be used by a reinforcement learning module 510 to train and refine models. For example, if event detection and classifier 408 classifies behavior as violent when in fact the behavior was not violent, reinforcement learning module 510 may adjust any number of parameters of a model to reduce the sensitivity of the model. If event detection and classifier 408 failed to properly classify behavior as violent when in fact the behavior was violent, reinforcement learning module 510 may adjust any number of parameters of a model to increase the sensitivity of the model.

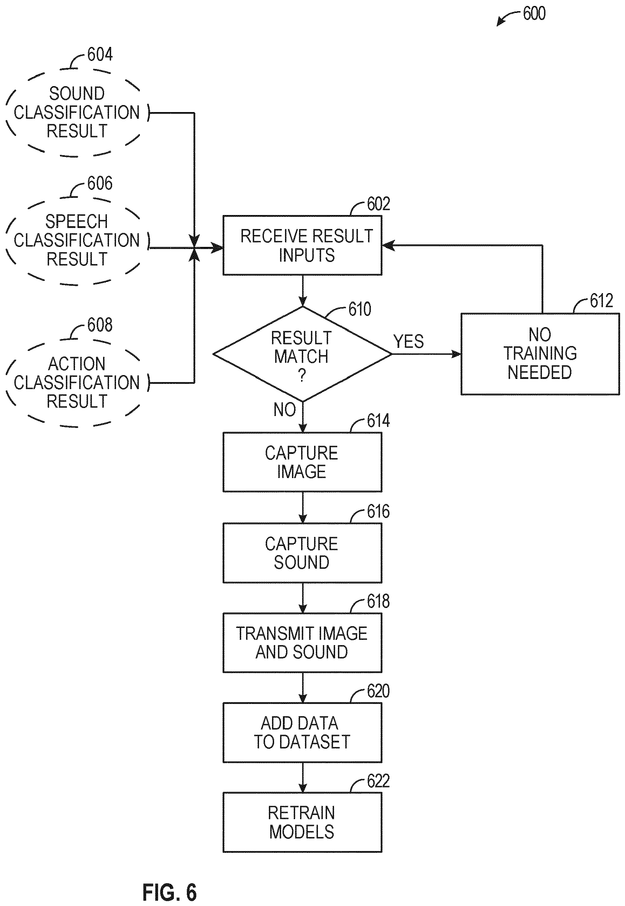

FIG. 6 shows a method 600 for training a model, such as by reinforcement learning module 510, in accordance with at least one example of this disclosure. Method 600 may begin at stage 604 where result inputs may be received. For example, sound classification results 604 from sound classifier 502, speech classification results 606 from speech recognizer 504, and action classification results 608 from action classifier 506 and/or fusion engine 508. At decision block 610, a determination can be made as to whether the classification results for sound, speech, and action match. A match may mean that the sound and speech correspond to the action. For example, the speech may be "don't hit me" and the sound may be a slapping sound. If action classification result 608 indicated a slap, then there is a match. If not, there is no match. If there is a match not training is needed (612) and method 600 may return to stage 602 where additional data may be received.

If the results do not match method 600, image data may be captured. For example, the various images captured by sensors, such as sensors 404, may be saved for a predetermined time period before and after the event. For instance, images from one minute before and after the event took place may be saved.

In addition to image data, sound data may be saved (616). The sound data may include both speech and sounds from the environment. The sound data may be saved for the predetermined time period before and after the event in the same manner as the image data.

Once saved, the image and sound data may be transmitted from the vehicle to a backend system (618). The backend system may use the sound and image data for use in dataset enhancement and retraining of models used by event detection and classifier 408 as disclosed herein.

The data captured may be collected from multiple sources and added to various datasets (620). For example, public datasets and/or real-time records from microphones, cameras, etc. may be used to enhance datasets and/or train/retrain models. Each of data may be processed by event detection and classifier for labeling and/or image and/or audio annotation.

The systems and methods disclosed herein may use deep learning with reinforcement learning as part of an AI-driven approach to help the system continue to learn new environments and continuous improvement in recognition and classification capabilities and accuracy. Stated another way, the data collected may be used to train and retrain models (622). For instance, if a violence case is reported without recognized and/or not classified by any of the models, system 400 may be trained with recorded video/audio data to allow the new audio, speech, and/or images to be associated with violence actions. In short, a model for different environments may be created and system 400 may learn to perform in the different environments at an optimal level.

When the data indicates a violent action has occurred or is likely to occur, action engine 410 may initiate actions to calm the situation and/or protect the victim. Based on a configuration of system 400, action engine 410 may take actions that include, but are not limited to, making a verbal announcement (e.g., issue an audible warning or reminder that the behavior is not appropriate), transmitting signal for a hardware interaction with the vehicle's engine control unit (ECU) (e.g., shut the engine down to stop the vehicle), modify a trip for rerouting (e.g., re-routing the vehicle to a police station), triggering telematics, etc.

As disclosed herein system 400 is making use of sound classification, violence intent speech recognition, and violent action visual recognition to classify types of violence. Sensors 404 disclosed herein may be installed in SAVs as aftermarket parts or as OEM parts. In-cabin sound and speech may be captured by omni-directional microphone arrays, and the visual images may be captured by camera and/or LiDAR systems.

Sound classifier 502 may be able to classify violence related sound such as fighting sound, shouting sound, screaming, etc. With omni-directional microphones, system 400 may be able to localize the location of the violent sound in the case of autonomous buses, planes, or other large vehicles.

Violent intent speech recognition may be classified using a variety of NLP implementations to understand the intent of a conversation and identify keywords to trigger distress. For privacy purposes, the conversation of the passengers need not be recorded. Rather, only certain keywords to be detected during a violence event may be detected. With the multi-stream inputs and multimodal, the models developed using system 400 may be trained with various datasets from sound, speech, and visual data points to classify the cycle of violence.

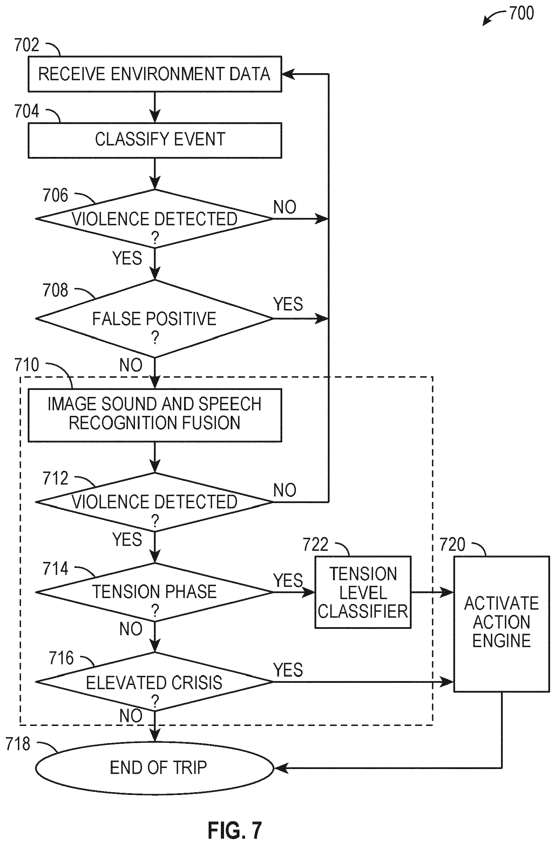

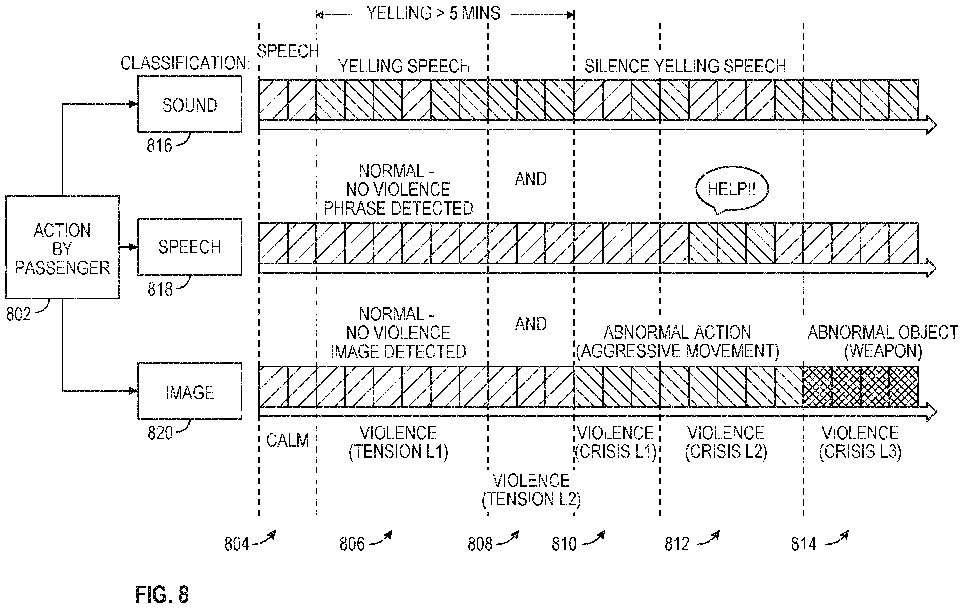

FIG. 7 shows a method 700 for detecting a classifying violence in accordance with at least one example of this disclosure. Method 700 may begin at stage 702 where environment data may be received. For example, using sensors, such as sensors 404, sound, speech, and image data may be received. The sensor data received may serve as input to a parallelized analysis process involving deep learning (DL) components that classifies an event (704). As shown in FIG. 8, the data (action by passenger) 802 may be classified with respect to at least classes comprising: "Calm/None" 804, "Tension L1" 806, "Tension L2" 808, "Crisis L1" 810, "Crisis L2" 812, and "Crisis L3" 814. Data 802 may include various components, such as a sound classification 816, a speech classification 818, and an image classification 820.

In a first stage of analysis, the various a focus may be to avoid any false positives, based on sound classification, and to validate the information captured by the camera with speech recognition. For example, the passenger may be watching an action movie on the laptop or phone or yelling while talking on the phone, thus violence may be detected (706). If no violence is detected based on the sound classification, method 700 may return to stage 702 where environment data may be collected.

If violence is detected, such as from the action movie or yelling by the passenger, a determination can be made as to whether the detection of violence is a false positive (708). For example, Tension L1 806 may be the initial classification based on sound, but speech classification 818 and image classification 820 may revert the classification to calm because the sound classification 816 does not corroborate speech classification 818 and image classification 820.

In a second stage, the violence detection may be triggered and predict the type of violence using image, sound, and speech recognition fusion (710). The prediction in the second stage may be done by multiple sensors - sound, speech, and image to increase the accuracy of the prediction. The various inputs may be broken into frames in predetermined time intervals (e.g., 30s per frame). Each frame may be subjected to image recognition using deep learning to identify objects, perform object tracking, etc. The result for each frame may then be associated together to determine if violence is present (712). The multiple event association may be done by either deep learning (e.g., implemented in an ANN model) or simple decisionmaking tree/truth table. If violence is not detected, method 700 may return to stage 702 where environment data is collected. If violence is detected a determination of whether the violence is in the tension phase (714). If the violence is not in the tension phase and an elevated crisis is not present, then the trip may continue as planned until the trip ends (718).

If the classifications do not indicate a tension phase of violence (714) and an elevated crisis level is present (716), method 700 may proceed to activation of the action engine 718. An example of where a tension phase may not be present, but a crisis might be present would include the sudden appearance of a weapon or an aggressor suddenly attacking a passenger without giving any warnings. Stated another way, in this situation, the tension phase of violence was bypassed and went straight to a crisis from a calm state.

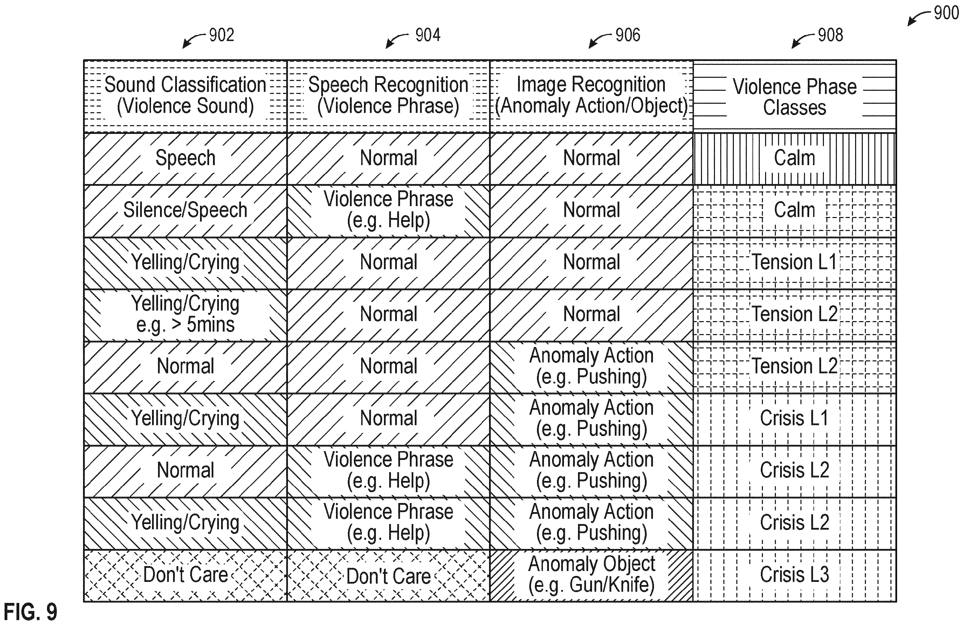

If the violence is in the tension phase (714), method 700 may proceed to determine a tension level. The tension level may be determined using formulas or tables as disclosed herein. FIG. 9 illustrates an example table 900 for various associations in accordance with at least one example of this disclosure. The first three columns, columns 902, 904, and 906 in FIG. 9 may represent three classifications. The various columns of table 900 can be used to map data to a violence phase and/or level of violence for a given phase. For example, column 902 can represent a sound classification, column 904 can represent a speech classification, and column 906 can represent an image classification. Column 908 can represent the phase and level for the phase of violence based on the classifications from columns 902, 904, and 906. For example, if the data received in stage 702 indicates the vehicle is quiet and then suddenly the speech data indicates a passenger yelled "HELP!" without any image data to corroborate a violent action, the violence phase and class may be calm 804. If a weapon is detected in an image regardless of the classifications for sound and speech the phase of violence may be classified as Crisis L3 814. The autonomous vehicle manufacturer or operator may customize violence classes found in table 900 based on the type of violence action/sound/phrases per the specific state or country regulation or other preferences.

Decision blocks 706 and 712 may utilize passenger feedback as disclosed herein to determine if violence is occurring. For example, and as disclosed herein, passenger feedback via a smart device, touch screen within the vehicle, and/or messages (voice or text) exchanged between passengers and security personnel, may be received along with environmental data (702) or during the classifying an event stage (704). In addition, decision blocks 706 and 712 may access other methods or subroutines that may transmit messages and receive input from the passengers.

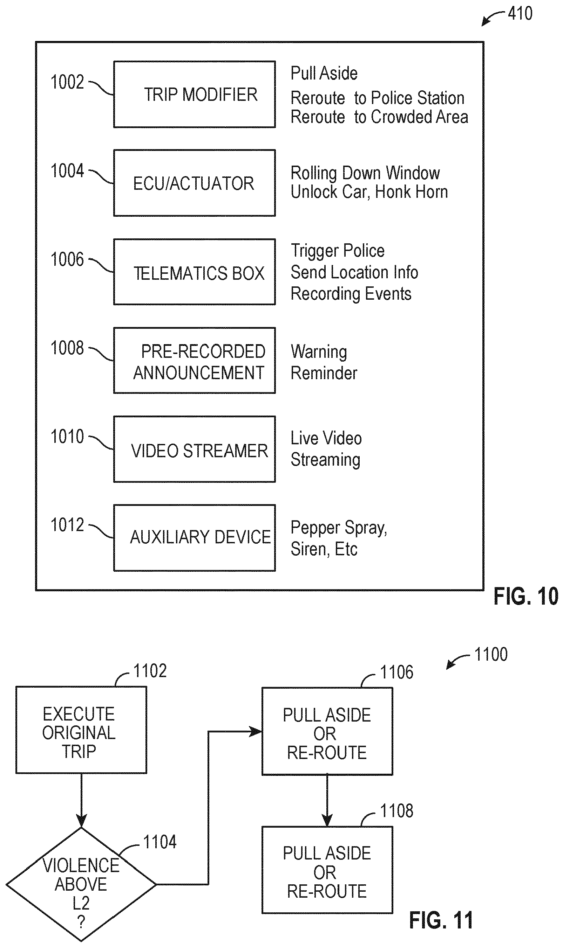

FIG. 10 shows a schematic of action engine 410 in accordance with at least one example of this disclosure. In stage 720 when action engine 410 is activated any number of actions may be taken. Action engine 410 may take actions based on the type of violence and its level in order to prevent the violence from escalating and to notify the authorities if needed.

Action engine 410 may include a trip modifier 1002. In the case of violence above Tension L2, the vehicle could be rerouted as illustrated in FIG. 11. As shown in FIG. 11, a method 1100 can include executing a trip as originally planned (1102). If violence about Tension L2 is not detected, the vehicle may continue the trip as originally planned (802). If violence above Tension L2 is detected (1104), trip modifier 1002 may be activated to pull the vehicle to the side of the road or re-route the vehicle to a police station, gas station, or other safe area (1106) where the trip may conclude (1108).

Action engine 410 may also include an ECU/Actuator 1004. ECU/Actuator 1004 may interface with the relevant auxiliary system in the vehicle. For example, ECU/Actuator 1004 may interface with the windows for lowering the windows automatically when a violence event is detected. ECU/Actuator 1004 may also activate the horn for repeatedly honking to alert people external the vehicle or unlock at least one door of the vehicle to ease egress by the victim. For example, the door closest to the victim may be unlocked while the door closes to the aggressor is locked by the action engine 410. In addition, the seatbelt of the aggressor may also be locked to restrain the aggressor inside the vehicle.

Action engine 410 may include or interface with a telematics box 1006. Telematics box 1006 may allow the sending, receiving, and storing of telemetry data such as location, speed, etc. Telematics box 1006 may connect via the vehicle's own onboard diagnostics (ODBII) or CAN-BUS port with a SIM card, and an onboard modem may enable communication through a wireless network. A panic button may be part of the vehicle or on a smart device of the user. The panic button may allow the user to active an eCall system that may be integrated with the connectivity to notify the police.

Action engine 410 may include a pre-recorded announcement 1008. Pre-recorded announcement 1008 may play through one or more speakers in the vehicle. Pre-recorded announcement 1008 may be a pre-recorded warning announcement. For example, when certain violence events are detected, pre-recorded announcement 1008 may instruct the passengers to soften their voices or otherwise stay calm. Action engine 410 may include a video streamer 1010. Video captured from the onboard cameras may be live streamed to authorities should the violence event escalate, thus allowing system 400 to leverage the connectivity available in the vehicle.

Action engine 410 may include auxiliary device 1012. Auxiliary device 1012 may be installed for further action to be taken real time when a violent event is happening in the car. For example, leveraging the camera tracking used to detect the violent event, pepper spray could be triggered to a targeted person to prevent the violence from escalating to life threatening situation. Siren could be installed to give additional alert to the people external to the vehicle as a way to scare off the attacker.

Vandalism in public transport costs millions each year in cleaning and repair costs. Many times the offender cannot be identified and held accountable. Future robotaxis may be more exposed to this threat since there is no driver to prevent it. The systems and methods disclosed herein seek to detect and even predict acts of vandalism via driver/passenger monitoring systems (DMS). Identification of offenders may be readily possible as passengers may be linked to specific rides through the registration of personal details before the hail request. As disclosed herein, vandalism may include, but is not limited to, activities such as graffiti, scratching surfaces, breaking parts, breaking glass or displays, cutting or ripping upholstery, or generally polluting the interior with for example food. All these activities have characteristics that may be identified with multi-modal sensing and machine learning algorithms as disclosed herein. Privacy of the passengers may be preserved as an identification will only take place in case of detected vandalism instead of stored permanently.

Vandalistic activities have characteristics that machine learning algorithms may detect. For example, when passengers reach from subtle movements like eating food (which may lead to pollution of the interior) to extreme physical aggression that involve movements of the whole body of the offender and can even impact the movement of the vehicle's body. As disclosed herein, a multi-modal cabin monitoring system that includes not only cameras and/or infrared sensors, but for example also microphones and/or olfactory sensors. The systems and methods disclosed herein may detect combinations of smell, sound (both of actions and speech, the latter combined with speech recognition), emotional state, hand-, foot-, and body movements to identify vandalistic behavior. Vandalism may also target the sensors themselves. In this case the absence of sensor data in combination with the data from the remaining sensors can be used to identify vandalism.

The systems and methods disclosed herein may implement a prediction phase and a recording phase. In the prediction phase the systems assume that vandalism does not start from one second to the next but builds up over time. Signs of imminent violence may be detected using audio sensors for both sounds of activities and speech recognition. If potential violence is detected the systems may use psychological and/or psychiatric techniques to address the passengers either making them aware that their intention is detected and will be recorded or directs them to calm down. The systems may be parameterized by experts in psychology and other behavior sciences to develop the right response to be delivered.

If vandalism cannot be prevented the systems may apply the recording phase. If the systems identify potentially vandalistic behavior they may store the sensor evidence and the detected actions locally in a safe storage for later use as evidence that may be mapped to the passenger data that booked the ride. The data may also be transmitted to a remote storage for mapping and/or analysis. After recording and saving the data, the vehicle may issue a warning to the passenger informing them that a potential vandalism was detected and will be investigate with possible legal consequences.

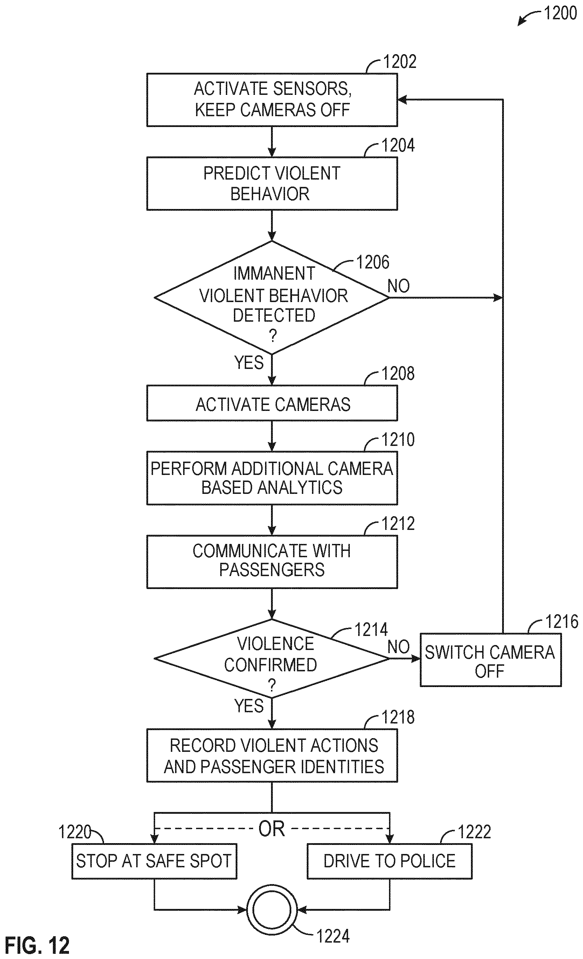

FIG. 12 shows a method 1200 for detecting and mitigating vandalism in accordance with at least one example of this disclosure. Method 1200 may begin at stage 1202 where sensors of the vehicle may be activated. The sensors may be sound, vibration, olfactory, or other scalar sensors as disclosed herein. Stated another way, the sensors may collect non-image data to be received by a processor. Using data from the sensors a violent behavior may be predicted (1204). For example, microphones may detect sounds that are similar to the sound of a part being broken off of the vehicle. For instance, the sound may be similar to that of plastic snapping. The sounds may also be speech where an offender states he or she has an intent to steal or otherwise damage a component of the vehicle. The sensors may not include cameras at this point. Other examples of sensors may include gyroscopes and accelerometers that may determine if the vehicle is being subjected to sudden gyrations or other movement typically associated with vandalism.

The various sensors may be applied in a hierarchical fashion. In order to protect privacy of the occupants, cameras may be kept off during normal operation. The other types of sensors may be used to first predict and later identify and record signs of negligent or violent behavior: Microphones may be used to detect sounds of physical damage (breaking, scratching, or tearing sounds) or aggression by passengers. Microphones may be particularly useful in the prediction phase when the emotional state of the passengers develops potential aggression and can still be prevented. Olfactory sensors may detect food or chemicals that may lead to pollution or damage of the interior. In addition, olfactory sensors may detect odors of rotting or otherwise spoiled food left inside the vehicle by a passenger. Movement sensors may detect violent movement caused by unusual and forceful movement of the passengers.

Based on the data a determination may be made that violent behavior is not imminent (1206). If violent behavior is not imminent, method 1200 may return to stage 1202 where additional data may be collected with the sensors to predict future violent behavior.

If a determination is made that violent behavior is imminent, i.e., vandalism is likely to happen, the cameras may be activated (1208). Using images captured via the cameras, additional analytics may be performed (1210). The camera based analytics may include communicating with passengers (1212). For example, a message may be transmitted to a smart device or played audibly inside the vehicle to inform the passengers the cameras have been activated and that potentially violent behavior or vandalism has been detected.

Using the images and possible communications with the passengers, violence and/or vandalism may be confirmed. For example, the images may include pictures of passengers eating and spilling food or beverages inside the card. The images may show the passenger behaving in an erratic fashion that is likely to cause damage to the vehicle.

If no violence or vandalism is detected method 1200 may proceed to stage 1216 where the cameras are turned off. After turning off the cameras, method 1200 may return to stage 1202 where additional sensor data may be recorded to begin method 1200 again.

If violence or vandalism is detected the cameras and sensors may record the violent actions and the passengers' identities (1218). For example, a user profile associated with the passenger that booked the ride may be saved for reference by the authorities. In addition, the data collected by the sensors and camera may be saved locally and/or transmitted to off-vehicle storage for later use by the authorities and/or in civil matters for damage to the vehicle.

As disclosed herein, part of the mitigation of the vandalism may include navigating the vehicle to a safe spot (1220) or a police station (1222). Upon arriving at the safe spot or police station method 1200 may terminate (1224).

The various embodiments disclosed herein may be implemented in one or a combination of hardware, firmware, and software. Embodiments may also be implemented as instructions stored on a machine-readable storage device, which may be read and executed by at least one processor to perform the operations described herein. A machine-readable storage device may include any non-transitory mechanism for storing information in a form readable by a machine (e.g., a computer). For example, a machine-readable storage device may include read-only memory (ROM), random-access memory (RAM), magnetic disk storage media, optical storage media, flash-memory devices, and other storage devices and media.

A processor subsystem may be used to execute the instruction on the -readable medium. The processor subsystem may include one or more processors, each with one or more cores. Additionally, the processor subsystem may be disposed on one or more physical devices. The processor subsystem may include one or more specialized processors, such as a graphics processing unit (GPU), a digital signal processor (DSP), a field programmable gate array (FPGA), or a fixed function processor.

Examples, as described herein, may include, or may operate on, logic or a number of components, modules, or mechanisms. Modules may be hardware, software, or firmware communicatively coupled to one or more processors in order to carry out the operations described herein. Modules may be hardware modules, and as such modules may be considered tangible entities capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine-readable medium. In an example, the software, when executed by the underlying hardware of the module, causes the hardware to perform the specified operations. Accordingly, the term hardware module is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software; the general-purpose hardware processor may be configured as respective different modules at different times. Software may accordingly configure a hardware processor, for example, to constitute a particular module at one instance of time and to constitute a different module at a different instance of time. Modules may also be software or firmware modules, which operate to perform the methodologies described herein.

Circuitry or circuits, as used in this document, may comprise, for example, singly or in any combination, hardwired circuitry, programmable circuitry such as computer processors comprising one or more individual instruction processing cores, state machine circuitry, and/or firmware that stores instructions executed by programmable circuitry. The circuits, circuitry, or modules may, collectively or individually, be embodied as circuitry that forms part of a larger system, for example, an integrated circuit (IC), system on-chip (SoC), desktop computers, laptop computers, tablet computers, servers, smart phones, etc.

As used in any embodiment herein, the term "logic" may refer to firmware and/or circuitry configured to perform any of the aforementioned operations. Firmware may be embodied as code, instructions or instruction sets and/or data that are hard-coded (e.g., nonvolatile) in memory devices and/or circuitry.

"Circuitry," as used in any embodiment herein, may comprise, for example, singly or in any combination, hardwired circuitry, programmable circuitry, state machine circuitry, logic and/or firmware that stores instructions executed by programmable circuitry. The circuitry may be embodied as an integrated circuit, such as an integrated circuit chip. In some embodiments, the circuitry may be formed, at least in part, by the processor circuitry executing code and/or instructions sets (e.g., software, firmware, etc.) corresponding to the functionality described herein, thus transforming a general-purpose processor into a specific-purpose processing environment to perform one or more of the operations described herein. In some embodiments, the processor circuitry may be embodied as a stand-alone integrated circuit or may be incorporated as one of several components on an integrated circuit. In some embodiments, the various components and circuitry of the node or other systems may be combined in a system-on-a-chip (SoC) architecture

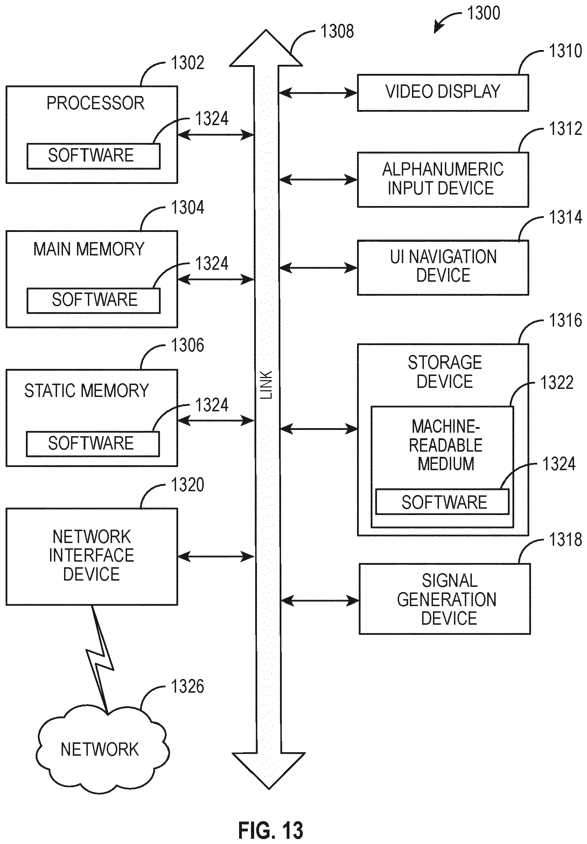

FIG. 13 is a block diagram illustrating a machine in the example form of a computer system 1300, such as computer system 202, within which a set or sequence of instructions may be executed to cause the machine to perform any one of the methodologies discussed herein, according to an embodiment. In alternative embodiments, the machine operates as a standalone device or may be connected (e.g., networked) to other machines. In a networked deployment, the machine may operate in the capacity of either a server or a client machine in server-client network environments, or it may act as a peer machine in peer-to-peer (or distributed) network environments. The machine may be a vehicle subsystem, a personal computer (PC), a tablet PC, a hybrid tablet, a personal digital assistant (PDA), a mobile telephone, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Similarly, the term "processor-based system" shall be taken to include any set of one or more machines that are controlled by or operated by a processor (e.g., a computer) to individually or jointly execute instructions to perform any one or more of the methodologies discussed herein.

Example computer system 1300 includes at least one processor 1302 (e.g., a central processing unit (CPU), a graphics processing unit (GPU) or both, processor cores, compute nodes, etc.), a main memory 1304 and a static memory 1306, which communicate with each other via a link 1308 (e.g., bus). The computer system 1300 may further include a video display unit 1310, an alphanumeric input device 1312 (e.g., a keyboard), and a user interface (UI) navigation device 1314 (e.g., a mouse). In one embodiment, the video display unit 1310, input device 1312 and UI navigation device 1314 are incorporated into a touch screen display. The computer system 1300 may additionally include a storage device 1316 (e.g., a drive unit), a signal generation device 1318 (e.g., a speaker), a network interface device 1320, and one or more sensors (not shown), such as a global positioning system (GPS) sensor, compass, accelerometer, gyrometer, magnetometer, or other sensor.

The storage device 1316 includes a machine-readable medium 1322 on which is stored one or more sets of data structures and instructions 1324 (e.g., software) embodying or utilized by any one or more of the methodologies or functions described herein. The instructions 1324 may also reside, completely or at least partially, within the main memory 1304, static memory 1306, and/or within the processor 1302 during execution thereof by the computer system 1300, with the main memory 1304, static memory 1306, and the processor 1302 also constituting machine-readable media.

While the machine-readable medium 1322 is illustrated in an example embodiment to be a single medium, the term "machine-readable medium" may include a single medium or multiple media (e.g., a centralized or distributed database, and/or associated caches and servers) that store the one or more instructions 1324. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solidstate memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks.

The instructions 1324 may further be transmitted or received over a communications network 1326 using a transmission medium via the network interface device 1320 utilizing any one of a number of well-known transfer protocols (e.g., HTTP). Examples of communication networks include a local area network (LAN), a wide area network (WAN), the Internet, mobile telephone networks, plain old telephone (POTS) networks, and wireless data networks (e.g., Bluetooth, Wi-Fi, 3G, and 4G LTE/LTE-A, 5G, DSRC, or Satellite (e.g., low-earth orbit) networks). The term "transmission medium" shall be taken to include any intangible medium that is capable of storing, encoding, or carrying instructions for execution by the machine, and includes digital or analog communications signals or other intangible medium to facilitate communication of such software.

Additional Notes

The following, non-limiting examples, detail certain aspects of the present subject matter to solve the challenges and provide the benefits discussed herein, among others.

Example 1 is a system for detecting and mitigating harassment within a vehicle, the system comprising: At least one processor; and a memory storing instructions that, when executed by the at least one processor, cause the at least one processor to perform actions comprising: receiving environmental data, the environmental data capturing behavior of one or more passengers within the vehicle, calculating a harassment score based on the environmental data, determining that the harassment score exceeds a predetermined threshold value, and activating a protection system of the vehicle to mitigate the harassment.

In Example 2, the subject matter of Example 1 optionally includes wherein calculating the harassment score comprises: determining a probability that a behavior of at least one of the passengers constitutes harassment; and determining a weighting factor for the behavior of the at least one of the passengers.

In Example 3, the subject matter of any one or more of Examples 1-2 optionally include wherein calculating the harassment score comprises determining a weighted average for behaviors of at least one of the passengers.

In Example 4, the subject matter of any one or more of Examples 1-3 optionally include wherein the actions further comprise activating enhanced monitoring systems of the vehicle when the harassment score exceeds the predetermined threshold.

In Example 5, the subject matter of any one or more of Examples 1-4 optionally include wherein the actions further comprise: transmitting a message to a device of one of the passengers in response to the determining that the harassment score exceeds the predetermined threshold value; and receiving a confirmation from one of the passengers that the behavior of another passenger is harassing.

In Example 6, the subject matter of any one or more of Examples 1-5 optionally include wherein receiving the environmental data comprises receiving the environmental from at least one sensor located within the vehicle.

In Example 7, the subject matter of any one or more of Examples 1-6 optionally include wherein activating the protection system comprises navigating the vehicle to one of: a police station, a business location, or a public space.

In Example 8, the subject matter of any one or more of Examples 1-7 optionally include wherein activating the protection system includes causing actuation of a seatbelt control system to lock a seatbelt of at least one of the passengers.

Example 9 is a system for detecting and mitigating destructive behavior within a vehicle, the system comprising: at least one processor; and a memory storing instructions that, when executed by the at least one processor, cause the at least one processor to perform actions comprising: receiving environmental data, the environmental data associated with behavior of one or more passengers within the vehicle and including sound data, speech data, and image data, classifying each of the sound data, speech data, and image data to a violence phase, the violence phase including at least one of a calm phase, a tension phase, and a crisis phase, determining that the violence phase for at least one of the sound data, speech data, and image data is at least one of the tension phase and the crisis phase, and causing an action to be activated in the vehicle to mitigate the destructive behavior.

In Example 10, the subject matter of Example 9 optionally includes wherein the actions further comprise determining a level of harmful behavior associated with the violence phase.

In Example 11, the subject matter of any one or more of Examples 9-10 optionally include wherein the actions further comprise determining when the environmental data results in a false positive based on an input received by at least one of the passengers.

In Example 12, the subject matter of Example 11 optionally includes wherein the actions further comprise adding the environmental data to a dataset associated with a model used to classify at least one of the sound data, speech data, and image data to create an updated dataset in response to the false positive.

In Example 13, the subject matter of Example 12 optionally includes wherein the actions further comprise retraining the model using the updated dataset.

In Example 14, the subject matter of any one or more of Examples 9-13 optionally include wherein classifying each of the sound data, speech data, and image data includes mapping at least one of the sound data, speech data, and image data to a table.

In Example 15, the subject matter of any one or more of Examples 9-14 optionally include wherein activating the action engine comprises transmitting a message to at least one of the passengers.

In Example 16, the subject matter of any one or more of Examples 9-15 optionally include wherein activating the action engine comprises navigating the vehicle to one of a police station, a business location, or a public space.

In Example 17, the subject matter of any one or more of Examples 9-16 optionally include wherein activating the action engine comprises unlocking at least one door of the vehicle.

In Example 18, the subject matter of any one or more of Examples 9-17 optionally include wherein activating the action engine comprises causing a component of the vehicle to activate to restrain a passenger inside the vehicle.

Example 19 is a system for detecting and mitigating damage to a vehicle, the system comprising: at least one processor; and a memory storing instructions that, when executed by the at least one processor, cause the at least one processor to perform actions comprising: receiving non-image data from at least one scaler sensor associated with the vehicle, predicting a harmful behavior based on the non-image data, determining if the harmful behavior is imminent, activating one or more cameras of the vehicle in response to determining that the harmful behavior is imminent, receiving image data from the one or more cameras, and confirming the harmful behavior is imminent based on the image data.

In Example 20, the subject matter of Example 19 optionally includes wherein the actions further comprise performing analytics on the received image data.

In Example 21, the subject matter of any one or more of Examples 19-20 optionally include wherein the actions further comprise confirming the harmful behavior.

In Example 22, the subject matter of Example 21 optionally includes wherein the actions further comprise activating one or more mitigation strategies in response to confirming the harmful behavior.

In Example 23, the subject matter of any one or more of Examples 19-22 optionally include wherein the actions further comprise: recording the harmful behavior using the one or more cameras; and transmitting the non-image data, the image data, and a user profile to a remote computer.

In Example 24, the subject matter of any one or more of Examples 19-23 optionally include wherein the actions further comprise transmitting a notification to police and activating a horn or exterior lights of the vehicle.

In Example 25, the subject matter of any one or more of Examples 19-24 optionally include wherein the actions further comprise navigating the vehicle to a safe space or a police station.

Example 26 is a method for detecting and mitigating harassment within a vehicle, the method comprising: receiving environmental data, the environmental data capturing behavior of one or more passengers within the vehicle; calculating a harassment score based on the environmental data; determining that the harassment score exceeds a predetermined threshold value; and activating a protection system of the vehicle to mitigate the harassment.

In Example 27, the subject matter of Example 26 optionally includes wherein calculating the harassment score comprises: determining a probability that a behavior of at least one of the passengers constitutes harassment; and determining a weighting factor for the behavior of the at least one of the passengers.

In Example 28, the subject matter of any one or more of Examples 26-27 optionally include wherein calculating the harassment score comprises determining a weighted average for behaviors of at least one of the passengers.

In Example 29, the subject matter of any one or more of Examples 26-28 optionally include activating enhanced monitoring systems of the vehicle when the harassment score exceeds the predetermined threshold.

In Example 30, the subject matter of any one or more of Examples 26-29 optionally include transmitting a message to a device of one of the passengers in response to the determining that the harassment score exceeds the predetermined threshold value; and receiving a confirmation from one of the passengers that the behavior of another passenger is harassing.

In Example 31, the subject matter of any one or more of Examples 26-30 optionally include wherein receiving the environmental data comprises receiving the environmental from at least one sensor located within the vehicle.

In Example 32, the subject matter of any one or more of Examples 26-31 optionally include wherein activating the protection system comprises navigating the vehicle to one of: a police station, a business location, or a public space.

In Example 33, the subject matter of any one or more of Examples 26-32 optionally include wherein activating the protection system includes causing actuation of a seatbelt control system to lock a seatbelt of at least one of the passengers.

Example 34 is at least one computer-readable medium comprising instructions to perform any of the methods of Examples 26-33.

Example 35 is an apparatus comprising means for performing any of the methods of Examples 26-33.

Example 36 is a method for detecting and mitigating destructive behavior within a vehicle, the method comprising: receiving environmental data, the environmental data associated with behavior of one or more passengers within the vehicle and including sound data, speech data, and image data; classifying each of the sound data, speech data, and image data to a violence phase, the violence phase including at least one of a calm phase, a tension phase, and a crisis phase; determining that the violence phase for at least one of the sound data, speech data, and image data is at least one of the tension phase and the crisis phase; and causing an action to be activated in the vehicle to mitigate the destructive behavior.

In Example 37, the subject matter of Example 36 optionally includes wherein the actions further comprise determining a level of harmful behavior associated with the violence phase.

In Example 38, the subject matter of any one or more of Examples 36-37 optionally include wherein the actions further comprise determining when the environmental data results in a false positive based on an input received by at least one of the passengers.

In Example 39, the subject matter of Example 38 optionally includes wherein the actions further comprise adding the environmental data to a dataset associated with a model used to classify at least one of the sound data, speech data, and image data to create an updated dataset in response to the false positive.

In Example 40, the subject matter of Example 39 optionally includes wherein the actions further comprise retraining the model using the updated dataset.

In Example 41, the subject matter of any one or more of Examples 36-40 optionally include wherein classifying each of the sound data, speech data, and image data includes mapping at least one of the sound data, speech data, and image data to a table.

In Example 42, the subject matter of any one or more of Examples 36-41 optionally include wherein activating the action engine comprises transmitting a message to at least one of the passengers.

In Example 43, the subject matter of any one or more of Examples 36-42 optionally include wherein activating the action engine comprises navigating the vehicle to one of a police station, a business location, or a public space.

In Example 44, the subject matter of any one or more of Examples 36-43 optionally include wherein activating the action engine comprises unlocking at least one door of the vehicle.

In Example 45, the subject matter of any one or more of Examples 36-44 optionally include wherein activating the action engine comprises causing a component of the vehicle to activate to restrain a passenger inside the vehicle.

Example 46 is at least one computer-readable medium comprising instructions to perform any of the methods of Examples 36-45.

Example 47 is an apparatus comprising means for performing any of the methods of Examples 36-45.

Example 48 is a method for detecting and mitigating damage to a vehicle, the system comprising: receiving non-image data from at least one scaler sensor associated with the vehicle; predicting a harmful behavior based on the non-image data; determining if the harmful behavior is imminent; activating one or more cameras of the vehicle in response to determining that the harmful behavior is imminent; receiving image data from the one or more cameras; and confirming the harmful behavior is imminent based on the image data.

In Example 49, the subject matter of Example 48 optionally includes performing analytics on the received image data.

In Example 50, the subject matter of any one or more of Examples 48-49 optionally include confirming the harmful behavior.

In Example 51, the subject matter of Example 50 optionally includes activating one or more mitigation strategies in response to confirming the harmful behavior.

In Example 52, the subject matter of any one or more of Examples 48-51 optionally include recording the harmful behavior using the one or more cameras; and transmitting the non-image data, the image data, and a user profile to a remote computer.

In Example 53, the subject matter of any one or more of Examples 48-52 optionally include transmitting a notification to police and activating a horn or exterior lights of the vehicle.

In Example 54, the subject matter of any one or more of Examples 48-53 optionally include navigating the vehicle to a safe space or a police station.

Example 55 is at least one computer-readable medium comprising instructions to perform any of the methods of Examples 48-54.

Example 56 is an apparatus comprising means for performing any of the methods of Examples 48-54.

In Example 57, the apparatuses or method of any one or any combination of Examples 1-56 can optionally be configured such that all elements or options recited are available to use or select from.

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

**Claims**

1. A system for detecting and mitigating harassment within a vehicle, the system comprising:

   at least one processor; and
   a memory storing instructions that, when executed by the at least one processor, cause the at least one processor to perform actions comprising:

   receiving environmental data, the environmental data capturing behavior of one or more passengers within the vehicle,
   calculating a harassment score based on the environmental data,
   determining that the harassment score exceeds a predetermined threshold value, and
   activating a protection system of the vehicle to mitigate the harassment.

2. The system of claim 1, wherein calculating the harassment score comprises:

   determining a probability that a behavior of at least one of the passengers constitutes harassment; and
   determining a weighting factor for the behavior of the at least one of the passengers.

3. The system of claim 1, wherein calculating the harassment score comprises determining a weighted average for behaviors of at least one of the passengers.

4. The system of any one of or any combination of claims 1-3, wherein the actions further comprise activating enhanced monitoring systems of the vehicle when the harassment score exceeds the predetermined threshold.

5. The system of any one of or any combination of claims 1-4, wherein the actions further comprise:

   transmitting a message to a device of one of the passengers in response to the determining that the harassment score exceeds the predetermined threshold value; and
   receiving a confirmation from one of the passengers that the behavior of another passenger is harassing.

6. The system of any one of or any combination of claims 1-5, wherein receiving the environmental data comprises receiving the environmental from at least one sensor located within the vehicle.

7. The system of any one of or any combination of claims 1-6, wherein activating the protection system comprises navigating the vehicle to one of: a police station, a business location, or a public space.

8. The system of any one of or any combination of claims 1-7, wherein activating the protection system includes causing actuation of a seatbelt control system to lock a seatbelt of at least one of the passengers.

9. A method for detecting and mitigating harassment within a vehicle, the method comprising:

   receiving environmental data, the environmental data capturing behavior of one or more passengers within the vehicle;
   calculating a harassment score based on the environmental data;
   determining that the harassment score exceeds a predetermined threshold value; and
   activating a protection system of the vehicle to mitigate the harassment.

10. The method of claim 9, wherein calculating the harassment score comprises:

    determining a probability that a behavior of at least one of the passengers constitutes harassment; and
    determining a weighting factor for the behavior of the at least one of the passengers.

11. The method of claim 9, wherein calculating the harassment score comprises determining a weighted average for behaviors of at least one of the passengers.

12. The method of any one of or any combination of claims 9-11, further comprising activating enhanced monitoring systems of the vehicle when the harassment score exceeds the predetermined threshold.

13. The method of any one of or any combination of claims 9-12, further comprising:

    transmitting a message to a device of one of the passengers in response to the determining that the harassment score exceeds the predetermined threshold value; and
    receiving a confirmation from one of the passengers that the behavior of another passenger is harassing.

14. The method of any one of or any combination of claims 9-13, wherein receiving the environmental data comprises receiving the environmental from at least one sensor located within the vehicle.

15. The method of any one of or any combination of claims 9-14, wherein activating the protection system comprises navigating the vehicle to one of: a police station, a business location, or a public space.

FIG. 1

200

```
                                    ┌─ 202
                          ┌──────────────────┐
                          │     MONITOR      │◄──────────┐
                          │   INTERACTIONS   │           │
                          └──────────────────┘           │
                                   │                      │
                                   ▼      ┌─ 204           │
┌ ─ ─ ─ ─ ─ ─ ─ ─ ┐               ╱╲                     │
         ┌─ 106                  ╱    ╲     NO             │
│ RELATIONSHIP    │             ╱BEHAVIOR╲───────────────►│
  ESTIMATOR        ────────────►│INAPPROPRIATE│           │
│                 │             ╲    ?   ╱                │
└ ─ ─ ─ ─ ─ ─ ─ ─ ┘              ╲    ╱                   │
        │                         ╲╱                      │
        │                         │ YES                   │
        │                         ▼      ┌─ 206           │
        │               ┌──────────────────┐              │
        │               │     ACTIVATE     │◄ ─ ─ ─ ─ ─ ─ ┤
        │               │     ENHANCED     │              │
        │               │    MONITORING    │              │
        │               └──────────────────┘              │
        │                        │                        │
        │                        ▼      ┌─ 208             │
        │                       ╱╲                        │
        │                      ╱    ╲    NO                │
        └─────────────────────►│BEHAVIOR│─────────────────►│
                               │INAPPROPRIATE│             │
                                ╲    ?   ╱                 │
                                 ╲    ╱                    │
                                  ╲╱                       │
                                  │ YES                    │
                                  ▼      ┌─ 210            │
                        ┌──────────────────┐               │
                        │     CONTACT      │               │
                        │     VICTIM       │               │
                        └──────────────────┘               │
                                 │                         │
                                 ▼      ┌─ 212             │
                                ╱╲                         │
                               ╱    ╲    YES               │
                              │HARASSMENT│──────────────────┘
                              │ DECLINED │
                               ╲    ?   ╱
                                ╲    ╱
                                 ╲╱
                                 │ NO
                                 ▼      ┌─ 214
                        ┌──────────────────┐
                        │     ACTIVATE     │
                        │    PROTECTION    │
                        │     SYSTEM       │
                        └──────────────────┘
```

**FIG. 2**

FIG. 3

FIG. 4

**FIG. 5**

EP 4 141 813 A1

600

604

SOUND
CLASSIFICATION
RESULT

606

SPEECH
CLASSIFICATION
RESULT

608

ACTION
CLASSIFICATION
RESULT

602

RECEIVE RESULT
INPUTS

610

RESULT
MATCH
?

YES

612

NO
TRAINING
NEEDED

NO

614

CAPTURE
IMAGE

616

CAPTURE
SOUND

618

TRANSMIT IMAGE
AND SOUND

620

ADD DATA
TO DATASET

622

RETRAIN
MODELS

FIG. 6

700

702 ── RECEIVE ENVIRONMENT DATA

704 ── CLASSIFY EVENT

706 ── VIOLENCE DETECTED ? — NO →

YES

708 ── FALSE POSITIVE ? — YES →

NO

710 ──

IMAGE SOUND AND SPEECH RECOGNITION FUSION

712 ── VIOLENCE DETECTED ? — NO →

YES

714 ── TENSION PHASE ? — YES →

NO

722 ── TENSION LEVEL CLASSIFIER

720 ── ACTIVATE ACTION ENGINE

716 ── ELEVATED CRISIS ? — YES →

NO

718 ── END OF TRIP

**FIG. 7**

FIG. 8

EP 4 141 813 A1

| Sound Classification (Violence Sound) | Speech Recognition (Violence Phrase) | Image Recognition (Anomaly Action/Object) | Violence Phase Classes |
|---|---|---|---|
| Speech | Normal | Normal | Calm |
| Silence/Speech | Violence Phrase (e.g. Help) | Normal | Calm |
| Yelling/Crying | Normal | Normal | Tension L1 |
| Yelling/Crying e.g. > 5mins | Normal | Normal | Tension L2 |
| Normal | Normal | Anomaly Action (e.g. Pushing) | Tension L2 |
| Yelling/Crying | Normal | Anomaly Action (e.g. Pushing) | Crisis L1 |
| Normal | Violence Phrase (e.g. Help) | Anomaly Action (e.g. Pushing) | Crisis L2 |
| Yelling/Crying | Violence Phrase (e.g. Help) | Anomaly Action (e.g. Pushing) | Crisis L2 |
| Don't Care | Don't Care | Anomaly Object (e.g. Gun/Knife) | Crisis L3 |

FIG. 9

410

| | | |
|---|---|---|
| 1002 | TRIP MODIFIER | Pull Aside<br>Reroute to Police Station<br>Reroute to Crowded Area |
| 1004 | ECU/ACTUATOR | Rolling Down Window<br>Unlock Car, Honk Horn |
| 1006 | TELEMATICS BOX | Trigger Police<br>Send Location Info<br>Recording Events |
| 1008 | PRE-RECORDED<br>ANNOUNCEMENT | Warning<br>Reminder |
| 1010 | VIDEO STREAMER | Live Video<br>Streaming |
| 1012 | AUXILIARY DEVICE | Pepper Spray,<br>Siren, Etc |

FIG. 10

1100

EXECUTE
ORIGINAL
TRIP
1102

VIOLENCE
ABOVE
L2
?
1104

PULL ASIDE
OR
RE-ROUTE
1106

PULL ASIDE
OR
RE-ROUTE
1108

FIG. 11

1200

```
┌─────────────────────────┐ 1202
│   ACTIVATE SENSORS,      │
│   KEEP CAMERAS OFF       │
└─────────────────────────┘
            │
            ▼
┌─────────────────────────┐ 1204
│   PREDICT VIOLENT        │
│   BEHAVIOR               │
└─────────────────────────┘
            │
            ▼
      ◇ IMMANENT           1206
      VIOLENT BEHAVIOR ──── NO ──►
        DETECTED ?
            │
           YES
            ▼
┌─────────────────────────┐ 1208
│   ACTIVATE CAMERAS       │
└─────────────────────────┘
            │
            ▼
┌─────────────────────────┐ 1210
│ PERFORM ADDITIONAL CAMERA│
│   BASED ANALYTICS        │
└─────────────────────────┘
            │
            ▼
┌─────────────────────────┐ 1212
│   COMMUNICATE WITH       │
│   PASSENGERS             │
└─────────────────────────┘
            │
            ▼
      ◇ VIOLENCE           1214
        CONFIRMED ──── NO ──► ┌──────────────┐ 1216
           ?                  │ SWITCH CAMERA│
            │                 │     OFF      │
           YES               └──────────────┘
            ▼
┌─────────────────────────┐ 1218
│ RECORD VIOLENT ACTIONS   │
│ AND PASSENGER IDENTITIES │
└─────────────────────────┘
```

- - - - - OR - - - - -

1220 ┌──────────────────┐          ┌──────────────────┐ 1222
     │ STOP AT SAFE SPOT│          │ DRIVE TO POLICE  │
     └──────────────────┘          └──────────────────┘

◎ 1224

**FIG. 12**

FIG. 13

Europäisches
Patentamt
European
Patent Office
Office européen
des brevets

# EUROPEAN SEARCH REPORT

**Application Number**

EP 22 18 7911

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 706 700 A (SHENZHEN LAUNCH TECH CO LTD) 17 January 2020 (2020-01-17) | 1,2,4,6, 9,10,12, 14 | INV. G06V20/52 G06Q50/26 |
| Y | * the whole document * <br> * deteailled description 3 * <br> * summary * | 3,11 | G06Q50/30 G06V20/59 G06V40/20 |
| X | US 9 762 462 B2 (VERIZON PATENT & LICENSING INC [US] ET AL.) 12 September 2017 (2017-09-12) | 1-15 | ADD. B60W50/00 G06Q50/00 |
| Y | * the whole document * <br> * paragraphs [0005] – [0006] * <br> * paragraphs [0061], [0070], [0102] * | 3,11 | G10L25/48 |
| Y | US 2021/201934 A1 (LYU YING [US] ET AL) 1 July 2021 (2021-07-01) * the whole document * * background * * col11L46-64 * | 3,11 | |
| A,P | US 2022/048464 A1 (TATSUMOTO YUKI [JP] ET AL) 17 February 2022 (2022-02-17) * the whole document * * paragraphs [0002], [0007] – [0012] * * paragraph [0060] * * claim 1 * | 1,6,8,9, 14 | |

| | | | TECHNICAL FIELDS SEARCHED (IPC) |
|---|---|---|---|
| | | | B60W G06K G06V G06F G10L G06Q |

The present search report has been drawn up for all claims

| Place of search | Date of completion of the search | Examiner |
|---|---|---|
| The Hague | 16 December 2022 | Thollot, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 7911

This annex lists the patent family members relating to the patent documents cited in  the above-mentioned European search report.
The members are as contained in the European Patent Office EDP file on
The European Patent Office is in no way liable for these particulars which are merely given for the purpose of information.

16-12-2022

| Patent document cited in search report | | Publication date | Patent family member(s) | | Publication date |
|---|---|---|---|---|---|
| CN 110706700 | A | 17-01-2020 | NONE | | |
| US 9762462 | B2 | 12-09-2017 | NONE | | |
| US 2021201934 | A1 | 01-07-2021 | US | 2021201934 A1 | 01-07-2021 |
| | | | WO | 2021138320 A1 | 08-07-2021 |
| US 2022048464 | A1 | 17-02-2022 | CN | 114074630 A | 22-02-2022 |
| | | | JP | 2022032342 A | 25-02-2022 |
| | | | US | 2022048464 A1 | 17-02-2022 |

EPO FORM P0459

For more details about this annex : see Official Journal of the European Patent Office, No. 12/82